# EUROPEAN PATENT SPECIFICATION

(11) **EP 2 527 503 B1**
(45) Date of publication and mention of the grant of the patent: **26.02.2025**
(21) Application number: 12181094.9
(22) Date of filing: 27.03.2008
(51) Int. Cl.: D01D 5/18, D01D 5/098, D01D 5/00, D01F 6/04

(54) **Collection of polyolefin nanofibers**
Herstellung von nanofasern durch schmelzspinnen
Production de nanofibres grâce à un filage par fusion

(30) Priority: 29.03.2007 US 921135 P
(43) Date of publication of application: 28.11.2012
(62) Divisional of application: 08727205.0
(73) Proprietor: Cummins, Inc., Columbus, Indiana 47201 (US)
(72) Inventor: Huang, Tao, Pennsylvania 19335 (US); Marshall, Larry R., Virginia 23838 (US); Armantrout, Jack Eugene, Virginia 23235 (US); Yembrick, Scott, Delaware 19805 (US); Dunn, William H., Wilmington, Delaware 19804 (US); O'Connor, James M., Smyrna, DE 19977 (US); Mueller, Tim, Wilmington, Delaware 19808 (US); Avgousti, Marios, Kennett Square, Pennsylvania 19348 (US); Wetzel, Mark David, Newark, Delaware 19711 (US)
(74) Representative: Marks & Clerk Cummins

(56) References cited:
- EP-A1- 1 918 430
- WO-A1-2006/066025
- FR-A1- 2 887 897
- JP-A- 2006 152 531
- JP-A- 2006 244 804
- US-A- 4 937 020
- WARD G F: "Meltblown nanofibres for nonwoven filtration applications", FILTRATION AND SEPARATION, ELSEVIER ADVANCED TECHNOLOGY, OXFORD, GB, vol. 38, no. 9, 1 November 2001 (2001-11-01), pages 42 - 43, XP004332342, ISSN: 0015-1882

## Description

### BACKGROUND OF THE INVENTION

### Field of the Invention

This invention relates to a melt spinning process for forming fibers and fibrous webs. In particular, very fine fibers can be made and collected into a fibrous web useful for selective barrier end uses such as in the fields of air and liquid filtration, flame retardancy, biomedical, battery and capacitor separators, biofuel membranes, cosmetic facial masks, biomedical applications, such as, hemostasis, wound dressings and healing, vascular grafts, tissue scaffolds, synthetic ECM (extra cellular matrix), and sensing applications, electronic/optical textiles, EMI Shielding, and antichembio protective coatings.

### Background

Centrifugal atomization processes are known in the art for making metal, metal alloy and ceramics powders.

Centrifugal spinning processes are known in the art for making polymer fibers, carbon pitch fibers and glass fibers, such as disclosed in U.S. Patent Nos. 3,097,085 and 2,587,710. In such processes, the centrifugal force supplied by a rotational disc or distribution disc produces enough shear to cause the material to become atomized or to form fibers. However, centrifugal spinning has only been successfully used for the production of fibers with diameters larger than micron size.

There is a growing need for very fine fibers and fibrous webs made from very fine fibers. These types of webs are useful for selective barrier end uses. Presently very fine fibers are made from melt spun "islands in the sea" cross section fibers, split films, some meltblown processes, and electrospinning. However, these processes are generally limited to making non-commercial quantities of nanofibers because of their very low throughput.

In order to successfully produce nano- or sub-micrometer diameter fibers by melt-spinning, drawing of the polymer must occur as a result of either mechanical or electrostatic forces acting on the melt jet at the spinneret. However, it is very difficult to generate the forces needed to create a reduction in diameter to the nanometer level. Melt-electrospinning has been conducted in some universities since the later 1970s, but there was no success reported in making nanofibers, especially from polyolefins, such as polyethylene (PE) and polypropylene (PP).

Electrospinning and electroblowing are processes for forming fibers with sub-micron scale diameters from polymer solutions through the action of electrostatic forces and/or shear force. The fibers collected as nonwoven mats have some useful properties such as high surface area-to-mass ratio, and thus have great potential in filtration, biomedical applications (such as, wound dressings, vascular grafts, tissue scaffolds), and sensing applications.

However, a vast majority of nanofibrous structures are produced by solvent based spinning processes. Chemicals used as solvents to dissolve many of the polymers being spun may leave residuals that are not compatible within the industry. With the intent of cleaner processing, environmental safety, and productivity, there is a persistent desire to produce fibers by melt spinning.

Spinning nanofibers directly from polymer melts would offer several advantages over solution based spinning: elimination of solvents and their concomitant recycling requirements, higher throughput, and spinning of polymers with low solvent solubility. Likewise, multi-component systems such as blends and composites would be more readily melt spun, because in many cases there is no common solvent for such blends. Finally, productivity would increase 10-500 fold and costs would drop significantly due to elimination of solvent recovery.

What is needed is a high throughput, cost effective and energy efficient process to melt spin nanofiber fibers and uniform fibrous webs.

Documents EP 1 918 430 A1, US 4 937 020 A and JP 2006 244804 A all disclose products comprising fibers having a diameter above the range herein claimed.

### SUMMARY OF THE INVENTION

A nanofiber forming process comprising the steps of supplying a spinning melt of at least one thermoplastic polymer to an inner spinning surface of a heated rotating distribution disc having a forward surface fiber discharge edge, issuing the spinning melt along said inner spinning surface so as to distribute the spinning melt into a thin film and toward the forward surface fiber discharge edge, and discharging separate molten polymer fibrous streams from the forward surface discharge edge to attenuate the fibrous streams to produce polymeric nanofibers that have mean fiber diameters of less than or equal to 400 nm and median fiber diameters of less or equal to 400 nm, is disclosed herein.

A melt spinning apparatus for making polymeric nanofibers is also disclosed, comprising a molten polymer supply tube having an inlet portion and an outlet portion and at least one molten polymer outlet nozzle at the outlet portion thereof, said supply tube positioned axially through said melt spinning apparatus, a spinneret comprising a rotatable molten polymer distribution disc, having an inner spinning surface inlet portion surrounding and in fluid communication with said outlet portion of said molten polymer supply tube, and an indirect heating source directed at said rotatable molten polymer distribution disc.

The present invention is a collection of nanofibers comprising polyolefin, as disclosed in present claim 1.

### DETAILED DESCRIPTION OF THE INVENTION

In classical centrifugal fiber spinning processes, there are two types of spinnerets. Capillary-based spinning uses a rotor with side nozzle holes. A polymer melt is pushed out through the side nozzle holes, and large diameter fibers are formed by centrifugal stretching, such as disclosed in U.S. Patent No. 4,937,020. Capillary-based classical centrifugal spinning is not related to the case of the present invention. Another is film splitting-based spinning using a conical disc as rotor, such as disclosed in U.S. Patent No. 2,433,000. A polymer melt or solution is issued either directly onto a conical disc surface, or through nozzle holes at the bottom of the distribution disc. Film splitting-based classical centrifugal spinning is more closely related to the present invention.

In the case of film splitting-based classical centrifugal spinning, large diameter fibers are formed from the splitting of a discrete thick melt film or non-uniform thick melt film with a thickness of about 3 to 4 mil. No nanofiber formation has been reported using this classical centrifugal fiber spinning process.

In contrast, according to the present invention, nanofibers are formed by film splitting at the forward discharge edge of a rotating distribution disc, such as a bell cup; from a fully spread thin melt film on the inner surface of the distribution disc, with a typical film thickness in the low micron range.

In the case of film splitting in classical centrifugal spinning, the polymer viscosity is relatively higher than in the case of the present invention. The higher the viscosity, the larger the fibers which are formed. In the present invention, if the polymer is of sufficiently low melt viscosity, the spinning melt can be spun into nanofibers without any rheology modification. Alternatively, in order to assist the spinning of a very high viscosity melt, the spinning polymer can be plasticized, hydrolyzed or otherwise cracked to lower the viscosity. Generally, a spinning melt with a viscosity between about 1 to 100 Pa.s is useful, even a viscosity between about 1 to 50 Pa.s.

In one alternative embodiment there is an additional stationary or "shear" disc placed downstream of the rotating distribution disc, and the polymer melt is issued through a gap between the rotating distribution disc and the shear disc, wherein the shear applied to the polymer melt causes shear thinning. The shear disc also acts as a melt distribution disc, helping to form a more uniform, fully spread, thin melt film on the inner surface of the rotating polymer distribution disc.

According to the present invention, the spinning melt comprises at least one polyolefin, such as polyethylene polymers and copolymers, polypropylene polymers and copolymers.

In the nanofiber melt spinning and web collection unit according to the present disclosure a rotating spinneret contains a rotating distribution disc suitable for forming fibers from the spinning melt. The distribution disc can have a concave or flat open inner spinning surface and is connected to a high speed motor by a drive shaft. By "concave" we mean that the inner surface of the disc can be curved in cross-section, such as hemispherical, have the cross-section of an ellipse, a hyperbola, a parabola or can be frustoconical, or the like. The melt spinning unit can optionally include a stationary shear disc mounted substantially parallel to the polymer distribution disc's inner surface. A spinning melt is issued along the distribution disc's inner surface, and optionally through a gap between the distribution disc inner surface and the shear disc, if present, so as to help distribute a sheared spinning polymer melt toward the forward surface of the discharge edge of the distribution disc. The distribution disc and shear disc are heated by an indirect, non-contact heating device 10, such as an infrared source, induction heating device or other such radiational heating source, to a temperature at or above the melting point of the polymer. The spinning melt is pumped from an inlet portion of a supply tube, running axially through the shear disc, if present, toward the distribution disc and exits the supply tube at an outlet portion thereof. The throughput rate of the melt can be between about 0.1 cc/min to about 200 cc/min, even between about 0.1 cc/min to about 500 cc/min.

As the spinning melt enters the gap between the distribution disc inner surface and stationary shear disc, it is directed into contact with the distribution disc inner surface, the polymer melt fully spreads and wets the distribution disc's inner surface, and a thin film of low micron-thickness forms and flows along the distribution disc's inner surface until it reaches the distribution disc's forward surface discharge edge. The rotational speed of the distribution disc is controlled to between about 1,000 rpm and about 100,000 rpm, even between about 5,000 rpm and about 100,000 rpm, or even between about 10,000 rpm and about 50,000 rpm. At the forward surface fiber discharge edge of the rotating distribution disc, the thin film splits into melt ligaments, the melt ligaments are further stretched by centrifugal force, and fibers are produced from the ligaments stretching.

One or more hot gas (e.g. air or N₂) rings, having hot gas nozzles disposed on the circumference thereof, can be positioned annular to the rotating distribution disc and/or the molten polymer supply tube, the nozzles being positioned so as to direct a hot gas flow toward the molten polymer ligaments, to maintain the temperature of the film splitting and ligament stretching regions above the melting point of the polymer, to maintain the ligaments in the melt state and enable further stretching into nanofibers. The hot gas flow can also act to guide the fibers toward the web collector.

Optionally, there can be one or more cooling gas (e.g. air or N₂) nozzles, or cooling gas rings having cooling gas nozzles disposed on the circumference thereof, positioned annular to the heating gas ring(s), to direct cooling gas flow into the fiber formation region to rapidly quench and solidify the nanofibers before they reach the web collector. The cooling gas flow further guides the nanofiber stream toward the web collector.

Web collection can be enhanced by applying vacuum through the collector to pull the fibers onto the collector. One form of the web collection ring is a screen ring which is cooled, electrically grounded and connected to a blower to form a vacuum collector ring. The web collector can be cooled with flowing cold water or dry ice. A tubular web collecting screen is positioned inside the web collection ring, and is moved vertically along the web collection ring in order to form a uniform nanofibrous web. A nonwoven web or other such fibrous scrim can be situated on the tubular web collecting screen, onto which the nanofibers can be deposited.

Optionally, an electrostatic charge voltage potential can be applied and maintained in the spinning space between the distribution disc and the collector to improve the uniformity of the fibrous web laydown. The electrostatic charge can be applied by any known in the art high voltage charging device. The electrical leads from the charging device can be attached to the rotating spinneret and the collector, or if an electrode is disposed within the spinning space, to the spinneret and the electrode, or to the electrode and the collector. The voltage potential applied to the spinning unit can be in the range between about 1kV and about 150 kV.

The designed temperature distribution surrounding the rotating distribution disc is an important distinguishing characteristic of the present invention process from classical centrifugal spinning.

In an example of the designed temperature profile within the melt spinning region surrounding the rotational distribution disc 1, in which T1 is the temperature of melt spinning zone around the rotating distribution disc, T2 is the temperature of melt threads (ligaments) 11 stretching zone, and T3 is the temperature of rapid quenching and nanofiber solidifying zone, T1>T2> Tm (the melting point of polymer) and T3<< Tm, i.e. well below the melting point of the polymer.

The distribution disc geometry, especially the diameter D and angle α of the distribution disc, can influence the formation of fibers and fiber size. Diameter D of the present distribution disc is between about 10 mm and 200 mm, the angle α of the forward surface discharge edge is 0 degrees when the disc is flat, or between greater than 0 degrees to about 90 degrees, and the edge of the distribution disc is optionally serrated 15 in order to form the fully spread thin film on the inner surface of the distribution disc. The serration on the distribution disc edge also helps to form the more uniform nanofibers with relatively narrow fiber diameter distribution.

The present process can make very fine fibers, preferably continuous fibers, with a mean fiber diameter of less than about 1,000 nm and even between about 100 nm to about 500 nm. The fibers can be collected onto a fibrous web or scrim. The collector can be conductive for creating an electrical field between it and the rotary spinneret or an electrode disposed downstream of the spinneret. The collector can also be porous to allow the use of a vacuum device to pull the hot and/or cooling gases away from the fibers and help pin the fibers to the collector to make the fibrous web. A scrim material can be placed on the collector to collect the fiber directly onto the scrim thereby making a composite material. For example, a nonwoven web or other porous scrim material, such as a spunbond web, a melt blown web, a carded web or the like, can be placed on the collector and the fiber deposited onto the nonwoven web or scrim. In this way composite fabrics can be produced.

Surprisingly, the process and apparatus disclosed herein have been demonstrated to successfully melt spin polyolefin nanofibers, in particular polypropylene and polyethylene nanofibers. The fiber size (diameter) distributions of said polyolefin nanofibers are believed to be significantly lower than heretofore known in the art polyolefin fibers. For example, U.S. Patent No. 4,397,020 discloses a radial spinning process which, while suggesting the production of sub-micron polyolefin fibers having diameters as low as 0.1 micron, exemplifies only PP fibers having diameters of 1.1 micron. In contrast, according to the present invention, collections of polyolefin nanofibers having a mean fiber diameter of less than about 400 nm have been obtained, and the median of the fiber diameter distributions is less than or equal to about 400 nm, or even less than 360 nm.

As can be seen from the Examples below, these low median fiber diameters demonstrate that in most cases the majority of polyolefin nanofibers collected are below the mean (number average) fiber diameters.

### TEST METHODS

In the description above and in the non-limiting examples that follow, the following test methods were employed to determine various reported characteristics and properties.

Fiber Diameter was determined as follows. Ten scanning electron microscope (SEM) images at 5,000x magnification were taken of each nanofiber layer sample. The diameter of more than 200, or even more than 300 clearly distinguishable nanofibers were measured from the SEM images and recorded. Defects were not included (i.e., lumps of nanofibers, polymer drops, intersections of nanofibers). The average fiber diameter for each sample was calculated and reported in nanometers (nm).

### EXAMPLES

Hereinafter the present invention will be described in more detail in the following examples.

### Example 1

Continuous fibers were made using an apparatus as descfibed above, from an ultra-high melt flow rate polypropylene homopolymer, with a very narrow molecular weight distribution (Metocene MF650Y, from Basell USA Inc., density of 0.91 g/cc at 23 °C measured using ASTM D 792, MFR = 1800 gram/10 min. measured using ASTM D1238). The typical shear viscosity of Metocene MF650Y PP is 4.89181 Pa-sec. at the shear rate of 10,000/sec. at 400 °F. The melting point of Metocene MF650Y PP is Tm>160 °C.

A PRISM extruder with a gear pump was used to deliver the polymer melt to the rotating spinneret through the supply tube. The pressure was set to a constant 61 psi. The gear pump speed was set to a constant set point 5 and this produced a melt feed rate of about 0.8 cc/min. The hot blowing air was set at a constant 30 psi. The rotating polymer melt distribution disc had a concave angle of 30 degrees, without a serrated discharge edge and in the absence of a shear disc. The rotation speed of the distribution disc was set to a constant 11,000 rpm. The temperature of the spinning melt from the melt supply tube was set to 251 °C, the temperature of the distribution disc was set to 260 °C and the temperature of the blowing air was set to 220 °C. No electrical field was used during this test.

Nanofibers were collected on a Reemay nonwoven collection screen that was held in place 15 inches away from the distribution disc by stainless steel sheet metal. The fiber size was measured from an image using scanning electron microscopy (SEM) and determined to be in the range of 99 nm to 1188 nm, with an average fiber diameter of about mean = 430 nm and median = 381 nm from the measurement of 366 fibers.

### Example 2

Example 2 was prepared similarly to Example 1, except the rotation speed of the distribution disc was set to a constant 13,630 rpm. The diameters of fibers became smaller than Example 1. The fiber size was measured from an image using SEM and determined to be in the range of 40 nm to 1096 nm, with an average fiber diameter of about mean = 363 nm and median = 323 nm from the measurement of 422 fibers.

### Example 3

Continuous fibers were made according to Example 1, except using a different PP homopolymer (Metocene MF650X, from Basell USA Inc., an ultra-high melt flow rate resin with very narrow molecular weight distribution, density of 0.91 g/cc at 23 °C measured using ASTM D 792, MFR = 1200 gram/10 min. measured using ASTM D1238). The typical shear viscosity of Metocene MF650Y PP is 5.76843 Pa-sec. at the shear rate of 10,000/sec. at 400 °F. The melting point of Metocene MF650Y PP is Tm>160 °C.

The distribution disc had a concave angle of 15 degrees, without a serrated discharge edge and in the presence of a stationary shear disc. The rotation speed of the distribution disc was set to a constant 11,000 rpm. The temperature of the spinning melt from the melt supply tube was set to 251 °C, the temperature of the distribution disc was set to 270 °C and the temperature of the blowing air was set to 220 °C. No electrical field was used during this test.

Fibers were collected on a Reemay nonwoven collection screen that was held in place 15 inches away from the rotary spinning disc by stainless steel sheet metal. The fiber size was measured from an image using scanning electron microscopy (SEM) and determined to be in the range of 63 nm to 1400 nm, with an average fiber diameter of about mean = 378 nm and median = 313 nm from the measurement of 727 fibers.

### Example 4

Continuous fibers were made according to Example 1, except using a different PP homopolymer (Metocene MF650W, from Basell USA Inc., a high melt flow rate resin with very narrow molecular weight distribution, density of 0.91 g/cc at 23 °C measured using ASTM D 792, MFR = 500 gram/10 min. measured using ASTM D1238). The typical shear viscosity of Metocene MF650Y PP is 9.45317 Pa-sec. at the shear rate of 10,000/sec. at 400 °F. The melting point of Metocene MF650Y PP is Tm>160 °C.

The distribution disc had a concave angle of 30 degrees, without a serrated discharge edge and in the absence of shear disc. The rotation speed of the distribution disc was set to a constant 11,000 rpm. The temperature of the spinning melt from melt supply tube was set to 251 °C, the temperature of the distribution disc was set to 260 °C and the temperature of the blowing air was set to 220 °C. No electrical field was used during this test.

Fibers were collected on a Reemay nonwoven collection screen that was held in place 15 inches away from the distribution disc by stainless steel sheet metal. The fiber size was measured from an image using scanning electron microscopy (SEM) and determined to be in the range of 60 nm to 1650 nm, with an average fiber diameter of about mean = 480 nm and median = 400 nm from the measurement of 209 fibers.

### Example 5

Continuous fibers were made according to Example 1, except using a polyethylene (LLDPE) injection molding resin (SURPASS^{®} IFs932-R from NOVA Chemicals, Canada), a high melt index resin with very narrow molecular weight distribution. The properties of this polymer were: density of 0.932 g/cc at 23 °C measured using ASTM D 792, MI = 150 gram/10 min. measured using ASTM D1238.

A PRISM extruder with a gear pump is used for deliver melt to the distribution disc through the supply tube. The pressure was set to a constant 61 psi. The gear pump speed was set to a constant 10 and this produced a melt feed rate of about 1.6 cc/min. The hot blowing air was set at a constant 30 psi. The rotary spinning disc had a concave angle of 30 degrees, with serrated discharge edge and in presence of a stationary shear disc. The rotation speed of the distribution disc was set to a constant 13,630 rpm. The temperature of the spinning melt from the melt supply tube was set to 250 °C, the temperature of the rotary spinning disc was set to 220 °C and the temperature of the blowing air was set to 160 °C. No electrical field was used during this test.

Fibers were collected on a Reemay nonwoven collection screen that was held in place 15 inches away from the distribution disc by stainless steel sheet metal. The fiber size was measured from an image using scanning electron microscopy (SEM) and determined to be in the range of 53 nm to 1732 nm, with an average fiber diameter of about mean = 409 nm and median = 357 nm from the measurement of 653 fibers.

## Claims

1. A collection of nanofibers in the form of a nonwoven web comprising polyolefin, said nanofibers having mean fiber diameters of less than or equal to 400 nm and a median fiber diameter of less than or equal to 400 nm, obtainable by a nanofiber forming process comprising the steps of:
supplying a spinning melt comprising said polyolefin to an inner spinning surface of a heated rotating distribution disc having a forward surface fiber discharge edge that is serrated;
issuing the spinning melt along said inner spinning surface so as to distribute the spinning melt into a thin film and toward the forward surface fiber discharge edge; and
discharging separate molten polymer fibrous streams from the serrated forward surface fiber discharge edge to attenuate the fibrous streams to produce polymeric nanofibers having a distribution of fiber diameters with a mean fiber diameter of less than or equal to 400 nm and a median fiber diameter of less than or equal to 400 nm, each measured using scanning electron microscopy.

2. The collection of nanofibers of claim 1, having a median fiber diameter of less than 360 nm measured using scanning electron microscopy.

3. The collection of nanofibers of claim 1, wherein the polyolefin is polypropylene.

4. The collection of nanofibers of claim 1, wherein the polyolefin is polyethylene.

5. The collection of nanofibers of claim 1, wherein said process further comprises the step of collecting the polymeric nanofibers on a fibrous scrim to form the nonwoven web.

## Patentansprüche

1. Sammlung von Nanofasern in der Form einer Vliesbahn, die Polyolefin umfasst, wobei die Nanofasern mittlere Faserdurchmesser von weniger als oder gleich 400 nm und einen Median-Faserdurchmesser von weniger als oder gleich 400 nm aufweisen, erhältlich durch ein Verfahren zum Bilden von Nanofasern, das die folgenden Schritte umfasst:
Zuführen einer Spinnschmelze, die das Polyolefin umfasst, zu einer inneren Spinnfläche einer beheizten rotierenden Verteilerscheibe, die eine Vorderflächen-Faserabgabekante aufweist, die gezackt ist;
Ausgeben der Spinnschmelze entlang der inneren Spinnfläche, um die Spinnschmelze in einen dünnen Film und in Richtung der Vorderflächen-Faserabgabekante zu verteilen; und
Abgeben von getrennten geschmolzenen Polymerfaserströmen von der gezackten Vorderflächen-Faserabgabekante, um die Faserströme abzuschwächen, um polymere Nanofasern herzustellen, die eine Verteilung von Faserdurchmessern mit einem mittleren Faserdurchmesser von weniger als oder gleich 400 nm und einem Median-Faserdurchmesser von weniger als oder gleich 400 nm aufweisen, jeweils gemessen unter Verwendung von Rasterelektronenmikroskopie.

2. Sammlung von Nanofasern nach Anspruch 1, mit einem Median-Faserdurchmesser von weniger als 360 nm, gemessen unter Verwendung von Rasterelektronenmikroskopie.

3. Sammlung von Nanofasern nach Anspruch 1, wobei das Polyolefin Polypropylen ist.

4. Sammlung von Nanofasern nach Anspruch 1, wobei das Polyolefin Polyethylen ist.

5. Sammlung von Nanofasern nach Anspruch 1, wobei das Verfahren ferner den Schritt des Sammelns der polymeren Nanofasern auf einem faserigen Gitterstoff umfasst, um die Vliesbahn zu bilden.

## Revendications

1. Collection de nanofibres sous la forme d'une toile non tissée comprenant de la polyoléfine, lesdites nanofibres ayant des diamètres moyens de fibres inférieurs ou égaux à 400 nm et un diamètre médian de fibres inférieur ou égal à 400 nm, pouvant être obtenues par un procédé de formation de nanofibres comprenant les étapes consistant à :
fournir une masse fondue de filage comprenant ladite polyoléfine à une surface de filage interne d'un disque de distribution rotatif chauffé présentant un bord de décharge de fibres en surface avant qui est cranté ;
sortir la masse fondue de filage le long de ladite surface de filage interne afin de distribuer la masse fondue de filage en un film fin et vers le bord de décharge de fibres en surface avant ; et
décharger des flux fibreux distincts de polymère fondu à partir du bord de décharge de fibres en surface avant cranté pour atténuer les flux fibreux pour produire des nanofibres polymères ayant une distribution de diamètres de fibres avec un diamètre de fibres moyen inférieur ou égal à 400 nm et un diamètre de fibres médian inférieur ou égal à 400 nm, chacun étant mesuré à l'aide de microscopie électronique à balayage.

2. Collection de nanofibres selon la revendication 1, présentant un diamètre médian de fibres inférieur à 360 nm, mesuré à l'aide de microscopie électronique à balayage.

3. Collection de nanofibres selon la revendication 1, dans laquelle la polyoléfine est du polypropylène.

4. Collection de nanofibres selon la revendication 1, dans laquelle la polyoléfine est du polyéthylène.

5. Collection de nanofibres selon la revendication 1, dans laquelle ledit processus comprend en outre l'étape de collecte des nanofibres polymères sur une grille fibreuse pour former la toile non tissée.
